# EUROPÄISCHE PATENTSCHRIFT

(11) **EP 1 352 163 B1**
(45) Veröffentlichungstag und Bekanntmachung des Hinweises auf die Patenterteilung: **14.11.2007**
(21) Anmeldenummer: 02711767.0
(22) Anmeldetag: 09.01.2002
(51) Int. Cl.: F02D 41/02, F02D 37/02

(54) **VERFAHREN ZUR AUFHEIZUNG EINES KATALYSATORS BEI VERBRENNUNGSMOTOREN MIT BENZINDIREKTEINSPRITZUNG**
METHOD FOR HEATING UP A CATALYST IN COMBUSTION ENGINES WITH DIRECT FUEL INJECTION
PROCEDE POUR LE CHAUFFAGE D'UN CATALYSEUR DANS DES MOTEURS A COMBUSTION INTERNE A INJECTION DIRECTE D'ESSENCE

(30) Priorität: 09.01.2001 DE 10100682
(43) Veröffentlichungstag der Anmeldung: 15.10.2003
(73) Patentinhaber: ROBERT BOSCH GMBH, 70442 Stuttgart (DE)
(72) Erfinder: WAGNER, Jean, 70182 Stuttgart (DE); KUFFERATH, Andreas, 71706 Markgroeningen (DE)
(86) Internationale Anmeldenummer: PCT/DE2002/000034
(87) Internationale Veröffentlichungsnummer: WO 2002/055857

(56) Entgegenhaltungen:
- EP-A- 0 856 655
- EP-A- 0 990 794
- EP-A- 1 130 241
- WO-A-00/08329

## Beschreibung

Es ist bereits bekannt, den Katalysator durch die Folgen einer Verschlechterung des Wirkungsgrades der motorischen Verbrennung aufzuheizen. Eine Wirkungsgradverschlechterung der motorischen Verbrennung kann beispielsweise durch eine Abweichung des Zündzeitpunktes vom optimalen Zeitpunkt herbeigeführt werden, wobei der optimale Zeitpunkt durch den maximalen Wirkungsgrad definiert wird. Durch die Wirkungsgradeinbuße ist das Abgas heißer im Vergleich zum Betrieb ohne Wirkungsgradeinbußen. Es entfaltet daher eine verstärkte Heizwirkung im Katalysator. Dieses sogenannte motorische Katheizen hat den Vorzug, ohne zusätzliche Komponenten, beispielsweise eine Sekundärluftpumpe auszukommen.

Für Motoren mit Benzin-Direkteinspritzung existieren prinzipiell zwei Möglichkeiten, die Abgastemperatur zu erhöhen, ohne zusätzliche Komponenten zu verbauen:
(i) Verspätete Zündung zur Verschlechterung des Wirkungsgrades der Verbrennung. Das gezündete Gemisch ist dabei stöchiometrisch oder leicht mager.
   Durch die ansteigende Laufunruhe bei später Zündung ist bei homogenem Gemisch die Spätzündung begrenzt. Bei tiefen Katalysator-Temperaturen können die Emissionen durch leicht mageres Abgaslambda verbessert werden, da der Katalysator die erforderlichen Konvertierungsbedingungen erreicht. Eine Abmagerung ist bei kaltem Motor aber nur eingeschränkt möglich.
(ii) Zusätzliche Einspritzung von Kraftstoff nach erfolgter Zündung zur Nachverbrennung. Das gezündete Gemisch ist dabei sehr mager (Schichtbetrieb) und aufgrund einer Ladungsschichtung noch zündfähig.

Bei einer Nacheinspritzung muß das Durchbrennen der zusätzlich eingespritzten Kraftstoffmasse gewährleistet sein (Nachverbrennung).

Um eine Nachverbrennung im Abgaskrümmer zu gewährleisten, muß dieser in seiner Bauform optimiert werden (frühe Durchmischung, geringe thermische Masse). Andere Ziele (Verringerung des Einbauraumes, Leistungsoptimierung) können dadurch eingeschränkt werden. Prinzipiell wird die Nachverbrennung bei kaltem Abgaskrümmer schlechter ablaufen. Daher können hier die Emissionen kurz nach Start kaum verringert werden, da der Katalysator noch nicht die erforderliche Temperatur aufweist.

Da im Brennraum höhere Temperaturen herrschen, können bei einer Nachverbrennung im Brennraum bereits kurz nach Start geringe Emissionen erreicht werden. Soll der Kraftstoff noch im Brennraum zünden, so müssen die Betriebsparameter in einem engen Fenster gehalten werden. Insbesondere muß die Nacheinspritzung sehr früh abgesetzt werden und trägt daher deutlich zur Momentenentwicklung bei. Diese setzt für kleine Lastpunkte sehr kurze Einspritzzeiten voraus, was sehr hohe Ansprüche an die Einspritzventile impliziert in Bezug auf Zumessgenauigkeit und Gemischaufbereitung.

Um die Probleme der Nacheinspritzung zu vermeiden, soll hier eine Verbesserung des Heizverfahrens mit Spätzündung dargestellt werden.

Für Motoren mit Benzin-Direkteinspritzung existiert die Möglichkeit, die Kraftstoff-Einspritzung vor der Zündung aufzuteilen, um die Gemischaufbereitung zu beeinflussen.

Durch die Aufteilung der Einspritzung vor Zündung kann der Motorlauf verbessert werden:
(i) Es ist bei verbesserter Laufruhe ein späterer Zündzeitpunkt möglich.
(ii) Das Gemisch kann früher und stärker abgemagert werden als ein rein homogenes Gemisch mit gleichmäßiger Ausfüllung des Brennraums mit Kraftstoff/LuftGemisch.
(iii) Gegenüber der Nacheinspritzung von Kraftstoff zeigt sich das Verfahren deutlich robuster und vermeidet extrem kurze Einspritzzeiten, mit den oben genannten Nachteilen.

Um einen sicheren Start und Hochlauf zu gewährleisten, können diese Phasen noch mit einer einfachen homogenen Einspritzung erfolgen.

Aus der EP-A 856 655 ist eine entsprechende Vorgehensweise zum Betreiben einer Direkteinspritzenden Brennkraftmaschine bekannt geworden, deren Abgas durch einen Katalysator gereinigt wird, welcher eine bestimmte Betriebstemperatur benötigt. Zur Katalysatorheizung werden die Luftfüllung und die Kraftstoffmenge erhöht sowie der Zündzeitpunkt nach Spät verschoben. Gleichzeitig mit diesen Maßnahmen ist die Aufteilung der Kraftstoff-Einspritzung auf zwei Teilmengen vorgesehen.

Eine Aufteilung der Einspritzung erfolgt erfindungsgemäß erst, sobald ausreichend Luftfüllung vorhanden ist. Dadurch werden zu kurze Einspritzzeiten vermieden. Außerdem wird so sichergestellt, daß die zur Gemischaufbereitung notwendige Ladungsbewegung vorhanden ist.

Durch die Aufteilung der Einspritzung entsteht eine Gemisch-Schichtung. Dadurch kann an der Zündkerze ein eher fettes Gemisch anliegen, obwohl das Summenlambda noch mager ist.

Durch das fette Gemisch um die Kerze kann ein sicheres Zünden auch bei sehr magerem Summenlambda sichergestellt werden.

Zusätzlich kann - trotz später Zündung - ein sicheres, schnelles Anbrennen des Gemischs gewährleistet werden. Dadurch erhöht sich die Laufruhe bei später Zündung.

Die sich bei der geteilten, vor der Zündung erfolgenden Einspritzung einstellende Gemischverteilung (idealisiert fett in Brennraummitte und mager an der Brennraumwand) kann die Wandwärmeverluste verringern. Abhängig von Brennraumform und den Parametern kann das folgende Auswirkungen haben:
(i) Höhere Abgastemperatur bei gleicher Abgasmenge, d. h. mehr Heizleistung: Die light-off-Temperatur, bei der die Schadstoffkonvertierung im Katalysator beginnt, wird schneller erreicht.
(ii) Geringere Abgasmenge bei gleicher Temperatur, da die Wandwärmeverluste niedriger sind: Die Verweilzeiten der Schadstoffkomponenten in Krümmer und Katalysator sind dann länger, wodurch eine Nachreaktion gefördert wird. Die Emissionen nach Katalysator können also auch hierdurch verbessert werden.

Durch die inhomogene Gemischverteilung kann, speziell aus den fetten Bereichen, eine erhöhte CO-Rohemission erzielt werden. CO-Grenzwerte können erfahrungsgemäß leicht erfüllt werden. Eine erhöhte CO-Rohemission kann aber zu einem früheren light-off des Katalysators genutzt werden, da die Light-off-Temperatur für CO unter der von Kohlenwasserstoffen liegt. Gleichzeitig sinken die NOx-Emissionen, da sowohl im Fettbereich als auch in der mageren Randzone weniger NOx entsteht.

Bei der vorgeschlagenen Heizstrategie wird die Zündung prinzipiell verspätet. Ob zusätzlich die Kraftstoff-Einspritzung aufgeteilt wird, kann von einem oder mehreren Betriebsparametern, beispielsweise von der Luftfüllung, der Motortemperatur, der Brennraumtemperatur (jeweils gemessen oder modelliert, z.B: kumulierte Einspritzmasse nach Start), dem angeforderten Sollmoment und/oder der Drehzahl abhängen.

Bei einer aufgeteilten Einspritzung ist der Verbrennungs-Wirkungsgrad unterschiedlich zur einfachen, homogenen Einspritzung. Dies wird beim Umschalten der Einspritzung berücksichtigt, indem mit der Umschaltung der Zündzeitpunkt angepaßt wird. Zusätzlich kann vor der Umschaltung die vorgesteuerte Luftfüllung angepaßt werden. Die Änderung des Drehmomentes aufgrund der Luftfüllungsänderung wird dann über eine Änderung des Zündzeitpunktes, die das Drehmoment gegenläufig beeinflußt, kompensiert.

Die Einspritzung soll erst dann umgeschaltet werden, sobald die aktuelle Luftfüllung eine Einstellung des geforderten Drehmomentes über eine Anpassung des Zündzeitpunktes erlaubt.

Da für einen Betrieb mit geteilter Einspritzung andere Betriebsgrenzen gelten, wird gegebenenfalls ein magereres Summenlambda und/oder eine spätere Zündung eingestellt.

Notwendige Anreicherungen für die Kompensation von Wandfilmeffekten o.Ä. ("Nachstartanreicherung") werden für die beiden Einspritzungen unterschiedlich berücksichtigt.

Im einzelnen betrifft das erfindungsgemäße Verfahren die Aufheizung eines Katalysators bei Verbrennungsmotoren, mit den Schritten:
- Erhöhen der Luftfüllung bei gleichzeitigem Verstellen der Zündung nach Spät zur Kompensation der zusätzlichen Luft,
- Prüfen, ob die Luftfüllung der Zylinder eine vorgegebene Schwelle überschreitet,
- Aufteilen der Kraftstoff-Einspritzung auf zwei Teilmengen, die vor der Zündung eingespritzt werden, sobald die Luftfüllung die Schwelle überschreitet.

Eine Ausgestaltung der Erfindung sieht vor, daß mit der Umschaltung der Kraftstoffeinspritzung auch der Zündzeitpunkt angepasst wird, um gleichbleibendes Moment während der Umschaltung zu gewährleisten. Dadurch wird vorteilhafterweise eine Wirkungsgradänderung, wie sie als Folge der Aufteilung der Kraftstoffeinspritzung zu erwarten ist, kompensiert.

Eine weitere Ausgestaltung der Erfindung sieht vor, daß nach erfolgter Umschaltung der Kraftstoffeinspritzung auf geteilte Einspritzungen die Luftfüllung weiter erhöht und die Zündung zur Kompensation des durch die zusätzliche Luft zu erwartenden Drehmomentanstiegs weiter verspätet wird.

Eine weitere Ausgestaltung der Erfindung sieht vor, daß die Vorsteuerung der Luftfüllung vor Beenden der Aufteilung der Kraftstoff-Einspritzung entsprechend der Änderung von Wirkungsgrad und Brenngrenzen durch die Umschaltung wieder reduziert wird.

Eine weitere Ausgestaltung sieht vor, daß in Verbindung mit der Umschaltung der Kraftstoffeinspritzung jeweils zuerst die Vorsteuerung der Luftfüllung entsprechend der erwarteten Wirkungsgradänderung angepasst wird, die Änderung der Luftfüllung durch Anpassung des Zündzeitpunkts korrigiert wird und die Umschaltung der Kraftstoff-Einspritzung abhängig davon erfolgt, ob das angeforderte Moment bei der aktuellen Luftfüllung und den bekannten Brenngrenzen auch bei der geänderten Kraftstoff-Einspritzung erreicht werden kann.

Eine weitere Ausgestaltung der Erfindung sieht vor, daß das Summenlambda im Brennraum nach dem Beginn der Aufteilung der Kraftstoff-Einspritzung magerer vorgesteuert wird als bei einfacher, nicht aufgeteilter Einspritzung.

Eine weitere Ausgestaltung der Erfindung sieht vor, daß vor dem Ende der Aufteilung der Kraftstoff-Einspritzung das Summen-Lambda im Brennraum wieder fetter vorgesteuert wird als beim Beginn der geteilten Einspritzung, um einen sicheren Übergang auf den Homogenbetrieb zu gewährleisten.

Eine weitere Ausgestaltung der Erfindung sieht vor, daß mit Beginn der Aufteilung der Kraftstoff-Einspritzung die Korrektur der Kraftstoffeinspritzung zur Kompensation eventueller Wandverluste ("Nachstartanreicherung") reduziert wird.

Eine weitere Ausgestaltung der Erfindung sieht vor, daß das Motormoment primär durch den Zündzeitpunkt und die vorgesteuerte Luftfüllung eingestellt wird, während die eingespritzte Kraftstoffmasse direkt von der erfassten Luftfüllung und einem vorprogrammierten Luft/Kraftstoffverhältnis abhängt.

Gegebenenfalls wird die Aufteilung der Einspritzmenge nur vorgenommen, wenn wenigstens eine weitere Bedingung für wenigstens einen weiteren Betriebsparameter erfüllt ist. Beispiele weiterer Betriebsparameter sind: Motortemperatur, Brennraumtemperatur (jeweils gemessen oder modelliert, z.B: kumulierte Einspritzmasse nach Start), angefordertes Sollmoment, Drehzahl.

Die erfindungsgemäße Aufteilung vermindert die Wandwärmeverluste, der Wirkungsgrad kann daher während der verschlechternd wirkenden Spätzündung gegenüber spät gezündetem homogenem Gemisch besser werden.

Vorteilhafterweise wird die Zündung bei einer Aufteilung der Einspritzung weiter verzögert als ohne Aufteilung. Start/Hochlauf sind homogen mit später Zündung um ausreichend Füllung aufzubauen (siehe unten).

Vorteilhafterweise wird bereits vor der Umschaltung durch eine weitgehende Spätverstellung der Zündung der Wirkungsgrad so verschlechtert, daß die Füllung zur Aufrechterhaltung des geforderten Momentes stark erhöht werden muß. Dadurch kann die für die Aufteilung geforderte Füllungsschwelle auch bei niedrigen Sollmomenten überschritten werden.

Durch eine als Folge der Spätzündung hinreichend große Luftfüllung können auch bei üblicher Auslegung der Einspritzventile kritisch kleine Einspritzzeiten vermieden werden, die bei kleinerer Luftfüllung und vorgegebenem maximalen Lambda (Laufgrenzenbedingung) auftreten könnten.

Als weiterer Vorteil kann während einer Aufteilung früher nach einem Motorstart weiter abgemagert werden, da sich bei einer Aufteilung der Kraftstoffmenge auf zwei Einspritzungen eine im Vergleich zu rein homogener Gemischaufbereitung verbesserte Magerlauffähigkeit gezeigt hat.

Die Zündung und Vorsteuerung der Luftfüllung muß bei Umschaltung zwischen Betrieb mit und ohne Aufteilung nochmals angepaßt werden. Siehe dazu auch die vorstehenden Ausführungen zu den Stichworten Umschaltung, Drehmoment Luftfüllung, Zündzeitpunkt, Kompensation.

Aus der DE 198 50 586 ist ein Motorsteuerungsprogramm bekannt, das die Umschaltung zwischen Schichtbetrieb und Homogenbetrieb steuert.

Im Schichtbetrieb wird der Motor mit einer stark geschichteten Zylinderladung und hohem Luftüberschuß betrieben, um einen möglichst niedrigen Kraftstoffverbrauch zu erreichen. Die geschichtete Ladung wird durch eine späte Kraftstoffeinspritzung erreicht, die im Idealfall zur Aufteilung des Brennraums in zwei Zonen führt: Die erste Zone enthält eine brennfähige Luft-Kraftstoff-Gemischwolke an der Zündkerze.

Sie wird von der zweiten Zone umgeben, die aus einer isolierenden Schicht aus Luft und Restgas besteht. Das Potential zur Verbrauchsoptimierung ergibt sich aus der Möglichkeit, den Motor unter Vermeidung von Ladungswechselverlusten weitgehend ungedrosselt zu betreiben. Der Schichtbetrieb wird bei vergleichsweise niedriger Last bevorzugt.

Bei höherer Last, wenn die Leistungsoptimierung im Vordergrund steht, wird der Motor mit homogener Zylinderfüllung betrieben. Die homogene Zylinderfüllung ergibt sich aus einer frühen Kraftstoffeinspritzung während des Ansaugvorganges. Als Folge steht bis zur Verbrennung eine größere Zeit zur Gemischbildung zur Verfügung. Das Potential dieser Betriebsart zur Leistungsoptimierung ergibt sich zum Beispiel aus der Ausnutzung des gesamten Brennraumvolumens zur Füllung mit brennfähigem Gemisch.

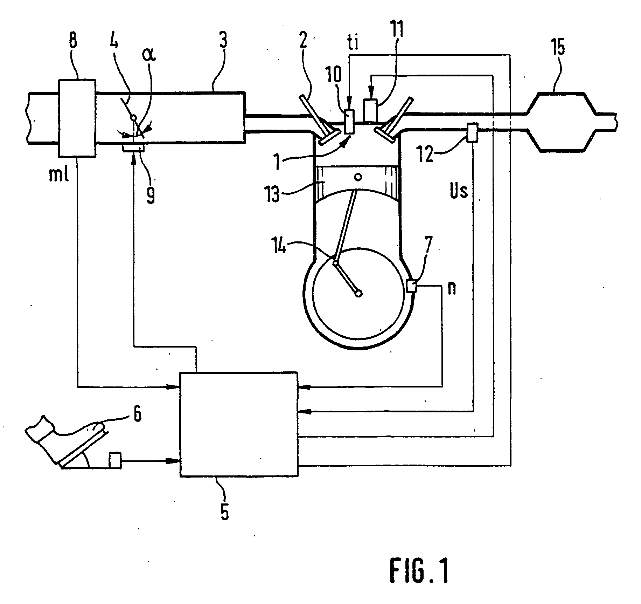

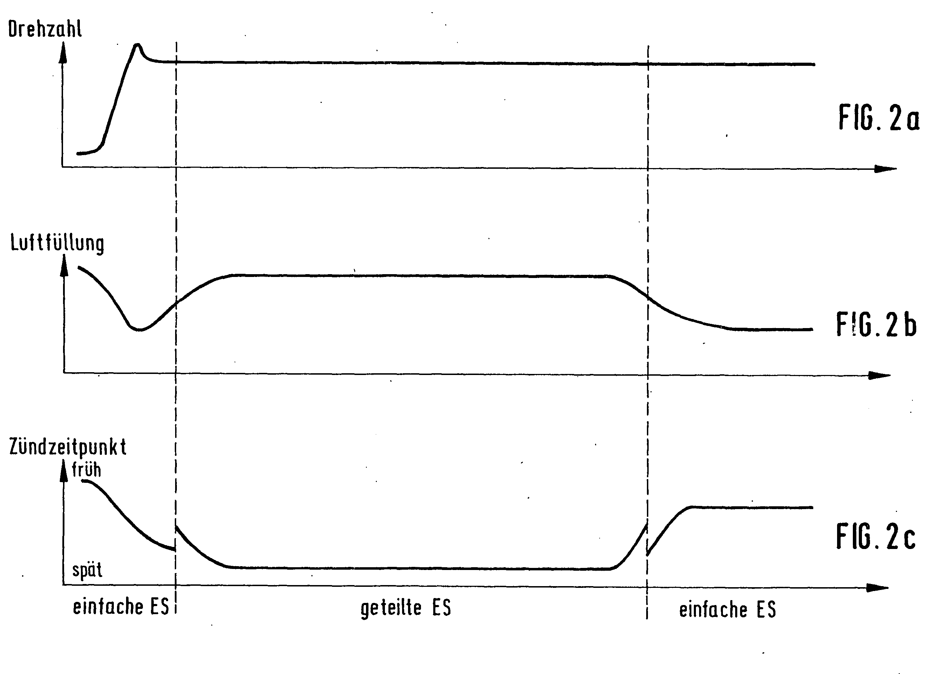

Im folgenden wird ein Ausführungsbeispiel der Erfindung mit Blick auf die Figur erläutert. Dabei zeigt Fig. 1 das technische Umfeld der Erfindung und Fig. 2 zeigt den prizipiellen Verlauf von Drehzahl, Luftfüllung und Zündzeitpunkt bei Umschaltungen zwischen einfacher und geteilter Einspritzung nach einem Start bei konstanter Drehzahl.

Die 1 in der Fig. 1 repräsentiert den Brennraum eines Zylinders eines Verbrennungsmotors. Über ein Einlaßventil 2 wird der Zustrom von Luft zum Brennraum gesteuert. Die Luft wird über ein Saugrohr 3 angesaugt. Die Ansaugluftmenge kann über eine Drosselklappe 4 variiert werden, die von einem Steuergerät 5 angesteuert wird. Dem Steuergerät werden Signale über den Drehmomentwunsch des Fahrers, bspw. über die Stellung eines Fahrpedals 6, ein Signal über die Motordrehzahl n von einem Drehzahlgeber 7, ein Signal über die Menge ml der angesaugten Luft von einem Luftmengenmesser oder Saugrohrdrucksensor 8 und ein Signal Us über die Abgaszusammensetzung und/oder Abgastemperatur von einem Abgassensor 12 zugeführt. Abgassensor 12 kann beispielsweise eine Lambdasonde sein, deren Nernstspannung den Sauerstoffgehalt im Abgas angibt und deren Innenwiderstand als Maß für die Sonden-, Abgas- und/oder Katalysator-Temperatur herangezogen wird. Das Abgas wird durch wenigstens einen Katalysator 15 geführt, in dem Schadstoffe aus dem Abgas konvertiert und/oder vorübergehend gespeichert werden.

Aus diesen und ggf. weiteren Eingangssignalen über weitere Parameter des Verbrennungsmotors wie Ansaugluft- und Kühlmitteltemperatur und so weiter bildet das Steuergerät 5 Ausgangssignale zur Einstellung des Drosselklappenwinkels alpha durch ein Stellglied 9 und zur Ansteuerung eines Kraftstoffeinspritzventils 10, durch das Kraftstoff in den Brennraum des Motors dosiert wird. Außerdem wird durch das Steuergerät die Auslösung der Zündung über eine Zündeinrichtung 11 gesteuert.

Der Drosselklappenwinkel alpha und die Einspritzimpulsbreite ti sind wesentliche, aufeinander abzustimmende Stellgrößen zur Realisierung des gewünschten Drehmomentes, der Abgaszusammensetzung und der Abgastemperatur. Eine weitere wesentliche Stellgröße zur Beeinflussung dieser Größen ist die Winkellage der Zündung relativ zur Kolbenbewegung.

Das hier vorgeschlagene Verfahren stellt gewissermaßen eine luftgeführte Betriebsart im Gegesatz zu einer kraftstoffgeführten Betriebsart dar. Eine Bestimmung von Stellgrößen zur Einstellung des Drehmomentes für eine kraftstoffgeführte Betriebsart ist Gegenstand der DE 198 51 990. Bei einer "kraftstoffgeführten" Betriebsart wird die Luftfüllung (betriebspunktabhängig) für ein generell mageres Lambda vorgesteuert. Schnelle Momenteneingriffe erfolgen direkt über die Kraftstoffmenge - also durch Lambdaschwankungen. Bei einer "luftgeführten" Betriebsart wird die Luftfüllung dagegen für ein festes Lambda (normalerweise 1 oder nahe 1) vorgesteuert. Die Kraftstoffmenge ist direkt an die aktuelle Luftfüllung gekoppelt, da das Lambda eine starre Randbedingung ist. Schnelle Momenteneingriffe erfolgen über den Zündzeitpunkt. Bei der hier bevorzugten luftgeführten Betriebsart wird das Motormoment daher primär durch den Zündzeitpunkt und die vorgesteuerte Luftfüllung eingestellt, während die eingespritzte Kraftstoffmasse direkt von der erfassten Luftfüllung und einem vorprogrammierten Luft/Kraftstoffverhältnis abhängt. Das hier vorgestellte Verfahren zeichnet sich dadurch aus, daß der schlechte motorische Wirkungsgrad hauptsächlich aus der späten Zündung resultiert. Die geteilte Einspritzung wird verwendet, um eine so späte Zündung überhaupt möglich zu machen und höhere CO-Rohemissionen zu erzielen. D.h., nach der Umschaltung wird der Zündwinkel weiter verspätet und noch mehr Luftfüllung aufgebaut. Erfindungsgemäß wird bereits vor der Umschaltung auf geteilte Einspritzungen der Wirkungsgrad verschlechtert, um die Luftfüllung zu erhöhen. Die Umschaltung erfolgt erst, sobald ausreichend Luftfüllung detektiert wurde. Es wird "luftgeführt" gefahren. D.h. das Lambda wird auf einem optimalen Wert nahe 1.0 gehalten. Momenteneingriffe erfolgen über Zündwinkel. Bei "kraftstoffgeführten" Verfahren muß ein "Mindestabstand" zu Lambda=1.0 gehalten werden, um einen Lambda-Reglerhub freizuhalten. Damit muß bei einem "kraftstoffgeführten" Verfahren magerer gefahren werden, als es für die Emissionen optimal wäre.

Weiterhin steuert das Steuergerät weitere Funktionen zur Erzielung einer effizienten Verbrennung des Kraftstoff/Luftgemisches im Brennraum, beispielsweise eine nicht dargestellte Abgasrückführung und/oder Tankentlüftung. Die aus der Verbrennung resultierende Gaskraft wird durch Kolben 13 und Kurbeltrieb 14 in ein Drehmoment gewandelt.

In diesem technischen Umfeld kann die Katalysatortemperatur gemessen werden oder aus Betriebsgrößen des Motors modelliert werden. Die Modellierung von Temperaturen im Abgastrakt von Verbrennungsmotoren ist beispielsweise aus der US 5 590 521 bekannt.

In diesem technischen Umfeld steuert die Steuereinrichtung 5 das oben angegebene Verfahren und gegebenenfalls seine angegebenen Ausgestaltungen.

Fig. 2 zeigt in Fig. 2a den Hochlauf der Drehzahl auf einen konstanten Wert. Im dargestellten Beispiel ist der Wert konstant, um die Erfindung in den Figuren 2 b und 2 c deutlicher hervortreten zu lassen.

In Fig. 2 b nimmt die Luftfüllung der Brennräume mit dem Hochlaufen der Drehzahl zunächst ab. Parallel wird der Zündzeitpunkt von früher Zündung (hohes Moment) zu späterer Zündung (niedrigeres Moment) verstellt. Nach Drehzahlhochlauf läuft der Zündzeitpunkt in Richtung spät. Dadurch wird beispielsweise eine Drehmomentreserve bereitgestellt, innerhalb der Drehmomentverluste durch Frühverstellung der Zündung schnell ausgeglichen werden können. Dies wird beim Übergang von ungeteilter Einspritzung zu aufgeteilter Einspritzung ausgenutzt: Ein Drehmomentverlust durch die Aufteilung der Einspritzung wird durch eine sprungartige Frühverstellung der Zündung kompensiert. Anschließend wird die Luftfüllung weiter erhöht und das daraus resultierende Zusatzmoment wird durch eine parallele stetige Spätverstellung der Zündung gewissermaßen kompensiert.

## Patentansprüche

1. Verfahren zur Aufheizung eines Katalysators (15) bei Verbrennungsmotoren mit Benzindirekteinspritzung mit den Schritten:
- Erhöhen der Luftfüllung bei gleichzeitigem Verstellen der Zündung nach Spät,
- Aufteilen der Kraftstoff-Einspritzung auf zwei Teilmengen, die vor der Zündung eingespritzt werden,
**dadurch gekennzeichnet, dass** folgende weitere Schritte vorgesehen sind:
- Prüfen, ob die Luftfüllung der Zylinder eine vorgegebene Schwelle überschreitet und
- sobald die Luftfüllung die Schwelle überschreitet, Aufteilen der Kraftstoff-Einspritzung auf die zwei Teilmengen, die vor der Zündung eingespritzt werden.

2. Verfahren nach Anspruch 1, **dadurch gekennzeichnet, daß** bei der Aufteilung der Kraftstoffeinspritzung auch der Zündzeitpunkt angepasst wird.

3. Verfahren nach einem der vorhergehenden Ansprüche, **dadurch gekennzeichnet, daß** nach erfolgter Umschaltung auf aufgeteilte Kraftstoffeinspritzung die Luftfüllung weiter erhöht und die Zündung weiter verspätet wird.

4. Verfahren nach Anspruch 3, **dadurch gekennzeichnet, daß** die Vorsteuerung der Luftfüllung vor Beenden der Aufteilung der Kraftstoff-Einspritzung entsprechend der Änderung von Wirkungsgrad und Brenngrenzen durch die Umschaltung wieder reduziert wird.

5. Verfahren nach einem der vorhergehenden Ansprüche,
- bei dem zur Umschaltung der Kraftstoffeinspritzung jeweils zuerst die Vorsteuerung der Luftfüllung entsprechend der erwarteten Wirkungsgradänderung angepasst wird,
- die Änderung der Luftfüllung durch Anpassung des Zündzeitpunkts korrigiert wird,
- die Umschaltung der Kraftstoff-Einspritzung abhängig davon erfolgt, ob das angeforderte Moment bei der aktuellen Luftfüllung und den bekannten Brenngrenzen auch bei der geänderten Kraftstoff-Einspritzung erreicht werden kann.

6. Verfahren nach einem der vorhergehenden Ansprüche, bei dem das Abgaslambda abhängig vom Betriebszustand fett oder mager eingestellt wird.

7. Verfahren nach einem der vorhergehenden Ansprüche, **dadurch gekennzeichnet, daß** mit Beginn der Aufteilung der Kraftstoff-Einspritzung das Summen-Lambda im Brennraum magerer vorgesteuert wird als bei einfacher Einspritzung.

8. Verfahren nach Anspruch 7, bei dem vor Ende der Aufteilung der Kraftstoff-Einspritzung das Summen-Lambda im Brennraum wieder fetter vorgesteuert wird als beim Beginn der geteilten Einspritzung.

9. Verfahren nach Anspruch 7 oder 8, bei dem die magere Vorsteuerung vom Betriebszustand abhängt.

10. Verfahren nach einem der vorhergehenden Ansprüche, bei dem mit Beginn der Aufteilung der Kraftstoff-Einspritzung die Korrektur der Kraftstoffeinspritzung zur Kompensation eventueller Wandverluste ("Nachstartanreicherung") reduziert wird.

11. Verfahren nach einem der vorhergehenden Ansprüche, bei dem eine das Motormoment primär durch den Zündzeitpunkt und die vorgesteuerte Luftfüllung eingestellt wird, während die eingespritzte Kraftstoffmasse direkt von der erfassten Luftfüllung und einem vorprogrammierten Luft/Kraftstoffverhältnis abhängt.

12. Steuereinrichtung zur Durchführung wenigstens eines der Verfahren nach den Ansprüchen 1-11.

## Claims

1. Method for heating a catalytic converter (15) in internal combustion engines with direct gasoline injection, having the steps:
- increasing the air charge while simultaneously adjusting the ignition in the late direction,
- splitting the fuel injection into two partial quantities which are injected before the ignition,
**characterized in that** the following further steps are provided:
- checking whether the air charge of the cylinder exceeds a predefined threshold, and
- once the air charge exceeds the threshold, splitting the fuel injection into the two partial quantities which are injected before the ignition.

2. Method according to Claim 1, **characterized in that**, as the fuel injection is split, the ignition time is also adapted.

3. Method according to one of the preceding claims, **characterized in that** after the switch has been made to split fuel injection, the air charge is increased further and the ignition is retarded further.

4. Method according to Claim 3, **characterized in that**, before the end of the split of the fuel injection, the pilot control of the air charge is reduced again corresponding to the change in efficiency and combustion limits as a result of the switch.

5. Method according to one of the preceding claims,
- in which, in order to switch the fuel injection, in each case firstly the pilot control of the air charge is adapted corresponding to the expected change in efficiency,
- the change in the air charge is corrected by adapting the ignition time,
- the switch of the fuel injection takes place as a function of whether the demanded torque can be reached with the present air charge and the known combustion limits even with the changed fuel injection.

6. Method according to one of the preceding claims, in which the exhaust gas lambda value is set to rich or lean as a function of the operating state.

7. Method according to one of the preceding claims, **characterized in that**, at the beginning of the split of the fuel injection, the summed lambda value in the combustion chamber is pilot-controlled to a leaner value than in the case of a single injection.

8. Method according to Claim 7, in which, before the end of the split of the fuel injection, the summed lambda value in the combustion chamber is pilot-controlled again to a richer value than at the beginning of the split injection.

9. Method according to Claim 7 or 8, in which the lean pilot control is dependent on the operating state.

10. Method according to one of the preceding claims, in which, at the beginning of the split of the fuel injection, the correction of the fuel injection is reduced in order to compensate any wall losses ("post-start enrichment").

11. Method according to one of the preceding claims, in which the engine torque is set primarily by means of the ignition time and the pilot-controlled air charge, while the injected fuel quantity is directly dependent on the measured air charge and a preprogrammed air/fuel ratio.

12. Control device for carrying out at least one of the methods according to Claims 1 - 11.

## Revendications

1. Procédé de chauffage d'un catalyseur (15) dans des moteurs à combustion à injection directe d'essence selon lequel :
- on augmente la charge d'air tout en réglant l'allumage dans le sens du retard,
- on répartit l'injection de carburant en deux quantités partielles, injectées avant l'allumage,
**caractérisé par** les autres étapes suivantes:
- on vérifie si la charge d'air des cylindres a dépassé un seuil prédéfini et
- dès que la charge d'air a dépassé le seuil, on répartit l'injection de carburant en deux quantités partielles injectées avant l'allumage.

2. Procédé selon la revendication 1,
**caractérisé en ce que**
lors de la répartition de la quantité de carburant, on adapte également l'instant de l'allumage.

3. Procédé selon l'une des revendications précédentes,
**caractérisé en ce qu'**
après commutation sur une injection de carburant réparti, on augmente la charge d'air et on retarde encore plus l'allumage.

4. Procédé selon la revendication 3,
**caractérisé en ce qu'**
on réduit de nouveau par commutation la commande préalable de la charge d'air avant de terminer la répartition de carburant à injecter selon la variation du rendement et les limites de combustion.

5. Procédé selon l'une des revendications précédentes,
selon lequel
- lors de la commutation de l'injection de carburant, on adapte tout d'abord au préalable la commande préalable de la charge d'air en fonction de la variation de rendement prévisible,
- on corrige la variation de charge d'air par l'adaptation de l'instant de l'allumage,
- on commute l'injection de carburant selon que l'on peut obtenir le couple demandé pour la charge d'air actuelle et les limites de combustion connues, peut être atteint même avec une modification d'injection de carburant.

6. Procédé selon l'une des revendications précédentes,
selon lequel
on règle le coefficient lambda des gaz d'échappement dans le sens d'un mélange riche ou d'un mélange pauvre, selon l'état de fonctionnement.

7. Procédé selon l'une des revendications précédentes,
**caractérisé en ce qu'**
on commande préalablement le coefficient lambda somme dans la chambre de combustion dans le sens d'un mélange plus maigre que pour une injection simple au début de la répartition de l'injection de carburant.

8. Procédé selon la revendication 7,
selon lequel avant la fin de la répartition de l'injection de carburant, on commande de nouveau de manière préalable, le coefficient lambda somme de la chambre de combustion dans le sens d'un mélange plus riche qu'au début de la répartition de l'injection.

9. Procédé selon la revendication 7 ou 8,
selon lequel
la commande préalable dans le sens d'un mélange maigre, dépend de l'état de fonctionnement.

10. Procédé selon l'une quelconque des revendications précédentes,
selon lequel
au début de la répartition de l'injection de carburant, on réduit la correction de l'injection de carburant pour compenser d'éventuelles pertes par paroi (post-enrichissement après le démarrage).

11. Procédé selon l'une quelconque des revendications précédentes,
selon lequel
on règle le couple moteur d'abord par l'instant d'injection et la charge d'air précommandée alors que la masse de carburant injectée dépend directement de la charge d'air saisie et d'un rapport préprogrammé air/ carburant.

12. Installation de commande pour la mise en oeuvre d'un procédé selon au moins l'une des revendications 1 à 11.
